# EUROPÄISCHE PATENTSCHRIFT

(11) **EP 1 088 493 B1**
(45) Veröffentlichungstag und Bekanntmachung des Hinweises auf die Patenterteilung: **27.02.2008**
(21) Anmeldenummer: 00121426.1
(22) Anmeldetag: 29.09.2000
(51) Int. Cl.: A45D 34/04, A45D 40/26, A45D 33/12

(54) **Behältnis mit einem Körper für einen Deoroller oder dergleichen**
Roll ball package with an applicator body for a deodorant or similar composition
Applicateur à bille avec un corp rotatif pour un déodorant ou similaire

(30) Priorität: 01.10.1999 DE 19947392
(43) Veröffentlichungstag der Anmeldung: 04.04.2001
(73) Patentinhaber: Weener Plastik GmbH & Co. KG, D-26818 Weener (DE)
(72) Erfinder: Gluth, Peter, 26826 Möhlenwarf (DE); Rieken, Günter, 26831 Bunde (DE)
(74) Vertreter: Wallinger, Michael

(56) Entgegenhaltungen:
- EP-A- 0 437 042
- EP-A- 0 764 512
- DE-A- 1 965 879
- FR-A- 1 474 301
- FR-A- 2 462 261
- FR-A- 2 601 618
- US-A- 2 483 234
- US-A- 3 235 900
- US-A- 4 752 148
- US-A- 4 940 350

## Beschreibung

Die Erfindung betrifft ein Behältnis mit einem Körper, wie einer Kugel, einem Ellipsoid oder dergleichen, zum Auftragen einer im wesentlichen flüssigen oder pulvrigen Substanz, insbesondere auf die Haut.

Ein solcher als Kugel ausgebildeter Körper wird insbesondere in sogenannten Deorollern verwendet. Bei einem Deoroller ist in einer Behältniswandung eine Kugel drehbar gelagert.

Ein Deoroller wird beim Auftragen des Deodorants auf die Haut mit der Kugel an der Haut abgerollt, wobei das Deodorant aus dem Behälterinneren über die Kugel auf der Haut aufgetragen wird. Die Kugel erstreckt sich teilweise in das Behälterinnere und teilweise außerhalb des Behälters.

Die Erfindung wird anhand eines sogenannten Deorollers bzw. eines Behältnisses zur Aufnahme eines Deodorants näher erläutert, wobei sie jedoch auch für andere Behältnisse verwendet werden kann, bei welchen eine Flüssigkeit oder eine pulvrige Substanz mittels eines Körpers, wie einer Kugel, aus dem Behälterinneren transportiert wird. Die Erfindung wird ferner anhand einer Flüssigkeit erläutert, wobei diese insbesondere dickflüssig oder dünnflüssig ist; anstelle der Flüssigkeit kann auch stets eine pulvrige Substanz verwendet werden, auch wenn auf ein solches in den Ausführungsformen nicht Bezug genommen wird.

Kugeln für einen Deoroller sind bereits bekannt.

Diese bekannten Kugeln bestehen aus zwei aneinandergefügten Hohlkugelhälften aus hartem Kunststoffmaterial, welche eine glatte Außenoberfläche aufweisen und das Deodorant durch Abrollen der Kugel vom Behälterinneren nach außen transportieren, um es auf der Haut aufzutragen.

Es ist jedoch auch beobachtet worden, daß das Deodorant erst nach mehreren Abrollversuchen auf die Haut aufgetragen werden konnte, der Transport des Deodorants aus dem Behälterinneren heraus unzureichend war.

Überdies ist an diesen bekannten Kugeln bemängelt worden, daß sie ein unangenehmes Gefühl bewirken, wenn sie mit der Haut in Kontakt treten. Dieses unangenehme Gefühl ist als besonders lästig für die Situationen beschrieben worden, in denen die Deodorantflüssigkeit unzureichend aus dem Behälterinneren heraustransportiert wird, so daß die außerhalb des Behälters angeordnete Kugeloberfläche trocken ist.

Aus der US 4,940,350 ist ein kugelförmiger Flüssigkeits-Applikator bekannt, der in der Basis eines Behältnishalses, welcher über der Öffnung eines Flüssigkeitsbehältnisses angebracht ist, drehbar gelagert ist und nach außen aus dem Behältnishals hervorsteht. Der Flüssigkeits-Applikator weist eine poröse Außenfläche auf, deren Poren dem geregelten Transport von Flüssigkeit aus dem Behältnisinneren nach außen und von Luft aus der Behältnisumgebung in das Behältnisinnere dienen.

Der Erfindung liegt daher die Aufgabe zugrunde, ein Behältnis zur Aufnahme von Deodorants und dergleichen mit einem Körper, wie einer Kugel zu schaffen, welche ermöglicht, daß mittels dieses Körpers in einem Deodorantroller oder dergleichen die Flüssigkeit bzw. das Deodorant verbessert und verläßlicher aus dem Inneren des Behältnisses herausbewegt werden kann, wobei unangenehme Reizungen beim Auftragen eines Deodorants oder dergleichen auf die Haut vermieden werden, und welche kostengünstig und auf baulich einfache Weise hergestellt werden kann.

Die Aufgabe wird gelöst durch ein Behältnis zur Aufnahme von im wesentlichen flüssigen oder pulvrigen Substanzen, wie Deodorants oder dergleichen, mit einem Körper, wie einer Kugel oder einem Ellipsoid gemäß Anspruch 1.

Bevorzugte Weiterbildungen der Erfindung sind Gegenstand der Unteransprüche.

Erfindungsgemäß wird ein Körper, wie eine Kugel oder ein Ellipsoid, für ein Behältnis zur Aufnahme von flüssigen oder pulvrigen Substanzen, wie Deodorants und dergleichen, vorgeschlagen, welcher wenigstens eine Vertiefung auf der Körperaußenoberfläche aufweist. Diese Vertiefung kann eine flüssige oder pulvrige Substanz aufnehmen, wobei diese flüssige oder pulvrige Substanz behältnisartig dort aufgenommen wird.

Im folgenden wird die Erfindung anhand einer Kugel beschrieben, wobei jedoch erfindungsgemäß auch vorgesehen ist, daß anstelle der Kugel ein anders ausgebildeter Körper, wie insbesondere ein Ellipsoid, vorgesehen ist, der die in Bezug auf die Kugel dargestellten Merkmale aufweist, und insbesondere zum Transport von Deodorant aus einem Behälterinneren heraus verwendet werden kann.

Die Kugel erstreckt sich mit einem Teil ihrer Oberfläche in das Behälterinnere und ist mit einem anderen Teil ihrer Oberfläche außerhalb des Behältnisses angeordnet. Die Kugel ist drehbar gelagert, so daß sie um wenigstens eine vorbestimmte Achse oder um beliebige Achsen gedreht werden kann. Insbesondere ist die Kugel derart gelagert, daß sie zwar gedreht werden kann, hierbei jedoch keine translatorischen Bewegungen ausführt. Während einer Drehung der Kugel können sich die Oberflächenbereiche der Kugel derart bewegen, daß ein im Behältnisinneren angeordneter Oberflächenbereich der Kugel aus dem Behältnis herausbewegt wird und umgekehrt.

Die Erfindung zeichnet sich dadurch aus, daß die Vertiefungen einen sichereren, verbesserten und verläßlicheren Transport von pulvrigen Substanzen oder Flüssigkeiten, wie Deodorants oder dergleichen, aus einem Deoroller nach außen bewirken können. Dabei können diese Vertiefungen auf unterschiedlichste Art und Weise ausgebildet sein. Eine einzelne Vertiefung kann einen größeren Oberflächenbereich der Kugel oder einen kleineren Oberflächenbereich der Kugel überdecken. Bevorzugt überdeckt eine Vertiefung einen Oberflächenbereich der Kugel, welcher zwischen 0,1% und 8%, besonders bevorzugt zwischen 0,1% und 3%, besonders bevorzugt zwischen 0,1% und 1%, besonders bevorzugt zwischen 0,3% und 0,7% der Kugeloberfläche überdeckt.

Bevorzugt sind zwischen 5% und 85%, besonders bevorzugt zwischen 10% und 65%, besonders bevorzugt zwischen 20% und 45%, besonders bevorzugt zwischen 30% und 40% der Kugeloberfläche als Vertiefung ausgebildet.

Die Vertiefungen können beliebig geformt sein und eine konstante oder variierende Tiefe aufweisen. Bevorzugt weisen unterschiedliche Vertiefungen eine unterschiedliche oder gleiche Tiefe auf. Besonders bevorzugt variiert die Tiefe innerhalb einer Vertiefung oder ist konstant.

Eine Vertiefung ist insbesondere als Nut ausgebildet, wobei sich die Nut im wesentlichen entlang einer Gerade erstrecken kann oder in einer beliebigen Schlangenform ausgebildet ist.

Bevorzugt ist eine Mehrzahl von Vertiefungen über die Kugeloberfläche verteilt angeordnet, wobei sich diese Vertiefungen gleichen oder unterschiedlich sind und wobei die Vertiefungen regelmäßig oder unregelmäßig entlang der Kugeloberfläche angeordnet sind.

Insbesondere sind die Vertiefungen punktförmig ausgebildet. Besonders bevorzugt sind die Vertiefungen kugelsegmentartig ausgebildet.

Die Vertiefungen weisen vorzugsweise eine Tiefe auf, welche zwischen 0,1 µm und 2 mm beträgt. Erfindungsgemäß ist jedoch nicht ausgeschlossen, daß die Tiefe geringer oder größer ist.

Eine erfindungsgemäße Kugel kann als Hohlkugel oder als massive Kugel ausgebildet sein. Erfindungsgemäß ist die Kugel aus mehreren unterschiedlichen Materialien hergestellt. Dabei sind insbesondere unterschiedliche Bereiche der Kugel aus verschiedenen Materialien hergestellt. Diese unterschiedlichen Bereiche können gemäß einer vorbestimmten Regel oder unregelmä-ßig positioniert sein. Bevorzugt weist die Kugeloberfläche unterschiedliche Materialien auf. Gemäß einer besonders bevorzugten Ausführungsform der Erfindung sind in wenigstens einem vorbestimmten Bereich der Kugel in radialer Richtung unterschiedliche Materialien angeordnet, welche in radialer Richtung aneinandergrenzen.

Gemäß einer bevorzugten Ausführungsform der Erfindung ist die Kugel bei jedem Radialabstand vom Kugelmittelpunkt aus genau einem Material gefertigt. Erfindungsgemäß weist die Kugel einen Kern auf, welcher eine Oberflächenprofilierung aufweist oder nicht aufweist und im wesentlichen im radial innen liegenden Bereich der Kugel angeordnet ist. Die Kugel ist wenigstens teilweise radial außerhalb dieses Kerns aus einem Material gefertigt, welches weicher als das Material des Kerns ist.

Der Kern ist beispielsweise seinerseits kugelförmig bzw. hohlkugelförmig ausgebildet und weist auf seiner Außenoberfläche eine Profilierung auf oder nicht auf. Eine derartige Profilierung kann beispielsweise zur besseren Verwendung mit einem radial außenliegenden Bereich aus einem anderen Material verwendet werden. Vorzugsweise ist die Kugel teilweise aus Polypropylen und/oder Polyethylen gefertigt und teilweise aus einem thermoplastischen Elastomer. Besonders bevorzugt ist die Kugel, insbesondere im Bereich der Kugeloberfläche, aus einer Mischung aus Polypropylen und thermoplastischem Elastomer gefertigt.

Erfindungsgemäß weist die Kugel einen innenliegenden Bereich aus einem harten Material, wie beispielsweise Polypropylen oder Polyethylen, auf, sowie einen sich wenigstens teilweise halbkugelförmig um diesen inneren Bereich erstreckenden zweiten Bereich aus einem weicheren Material, beispielsweise aus einem thermoplastischen Elastomer.

Bevorzugt ist diese Schicht aus weicherem Material zwischen 1 µm und 3 mm, bevorzugt zwischen 1 µm und 0,5 mm dick.

Die Schicht aus weicherem Material bewirkt insbesondere ein weiches, angenehmes Gefühl auf der Haut (Soft-Touch-Gefühl).

Gemäß einer besonders bevorzugten Ausführungsform der Erfindung ist die Kugeloberfläche zumindest außerhalb der Vertiefungen aus einem weichen Material, wie insbesondere aus thermoplastischem Elastomer, hergestellt. In der Oberfläche der Vertiefungen ist diese Kugel aus einem weichen Material, beispielsweise aus thermoplastischem Elastomer, oder aus einem härteren Material, beispielsweise aus Polypropylen oder Polyethylen, hergestellt.

Eine erfindungsgemäße Kugel kann insbesondere verwendet werden, um eine pulvrige oder flüssige, insbesondere eine dickflüssige, Substanz aus einem Behältnis herauszubewegen.

Erfindungsgemäß wird zur Herstellung einer Kugel gemäß der vorliegenden Erfindung in einem ersten Schritt eine Kugel aus einem im wesentlichen harten Material, wie Polypropylen oder Polyethylen, gefertigt wird, und in einem zweiten Schritt auf diese Kugel in einem Spritzgußverfahren ein zweites Material, welches weich ist, wie thermoplastisches Elastomer, aufgespritzt wird, so daß eine im wesentlichen einstükkige Kugel entsteht.

Erfindungsgemäß wird die Kugel in einem Spritzgußverfahren hergestellt, wobei eine Form verwendet wird, die derart ausgebildet ist, daß auf der Oberfläche der Kugel Vertiefungen entstehen.

Die Anmelderin behält sich vor, gegebenenfalls isoliert Schutz für eine Verschlußkappe zum Verschließen eines Deorollers zu beanspruchen, welche aus unterschiedlichen Materialien gefertigt ist.

Bevorzugt ist diese Verschlußkappe aus wenigstens einem harten Material und wenigstens einem weichen Material gefertigt.

Das harte Material ist insbesondere Polypropylen oder Polyethylen.

Das weiche Material ist insbesondere ein thermoplastisches Elastomer.

Vorzugsweise ist eine im wesentlichen dünne Schicht, die insbesondere zwischen 1 µm und 3 mm dick ist, aus einem weichen Ma.terial, wie thermoplastischem Elastomer, auf einen Grundkörper aus hartem Material, wie Polypropylen oder Polyethylen, aufgetragen.

Vorzugsweise sind die weichen Schichten, die auf die Kugel bzw. die Verschlußkappe aufgetragen sind, in einem Spritzgußverfahren aufgespritzt.

Die Erfindung wurde anhand beispielhafter Ausführungsformen beschrieben, welche die Erfindung jedoch nicht beschränken sollen.

Im folgenden sind Kugeln anhand der Figuren näher erläutert, wobei diese Kugeln keine Ausführungsbeispiele darstellen.

Dabei zeigt:
- Fig. 1: eine erste beispielhafte Kugel in teilgeschnittener, schematischer Ansicht;
- Fig. 2: eine zweite beispielhafte Kugel in schematischer, teilgeschnittener Ansicht; und
- Fig. 3: eine dritte beispielhafte Kugel in schematischer, teilgeschnittener Ansicht.

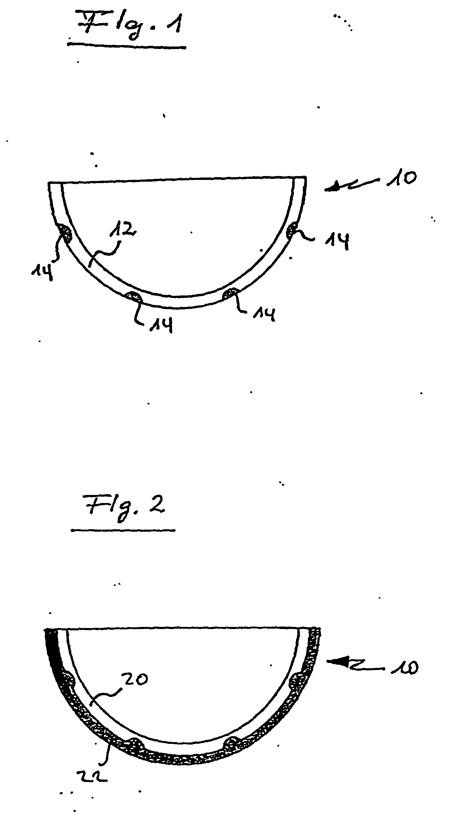

Fig. 1 zeigt eine erste beispielhafte Kugel 10, welche hier in teilgeschnittener Form als Halbkugel und Hohlkugel ausgebildet ist. In die Kugelwandung 12 ist eine Mehrzahl von Vertiefungen 14 angeordnet, welche sich kugelsegmentartig in die Wandung 12 erstrecken.

Fig. 2 zeigt eine zweite beispielhafte Kugel, welche ebenfalls als Halb- und Hohlkugel ausgebildet ist.

Die Kugelwandung 12 besteht aus einem ersten Material 20 sowie einem zweiten Material 22, das sich im wesentlichen radial außerhalb des ersten Materials 20 erstreckt. Das erste Material 20 ist insbesondere ein im wesentlichen hartes Material, während das zweite Material 22 ein im wesentlichen weiches Material ist. Das Material 20 ist beispielsweise Polyethylen oder Polypropylen. Das Material 22 ist beispielsweise ein thermoplastisches Elastomer.

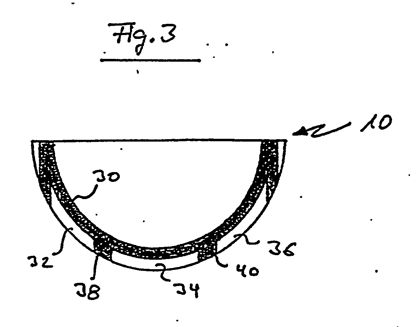

Fig. 3 zeigt eine dritte beispielhafte Kugel, welche eine Wandung 30 aufweist, innerhalb welcher radial außenliegend Nuten 32, 34, 36 angeordnet sind, welche durch Stege 38, 40 oder dergleichen unterbrochen werden.

Das erste Material 20 weist, dem zweiten Material 22 zugewandt, eine Profilierung 24 auf, in welche sich das zweite Material legt.

### Bezugszeichen

- 10: Kugel
- 12: Kugelwandung
- 14: Vertiefung
- 20: erstes Material
- 22: zweites Material
- 24: Profilierung
- 30: Wandung
- 32: Nut
- 34: Nut
- 36: Nut
- 38: Steg
- 40: Steg

## Patentansprüche

1. Behältnis mit einem Körper (10), insbesondere Kugel oder Ellipsoid, zur Anordnung in dem Behältnis, welches zur Aufnahme von pulvrigen oder flüssigen Substanzen, wie Deodorants oder dergleichen, vorgesehen ist,
- wobei der Körper (10) an dem Behältnis drehbar gelagert ist und sich ein Teil der Körperoberfläche in das Behältnisinnere erstreckt und ein Teil der Körperoberfläche sich außerhalb des Behältnisses erstreckt und wobei die pulvrige oder flüssige Substanz auf der Körperoberfläche transportiert werden kann, und zwar vom Behältnisinneren zum Behältnisäußeren, und
- wobei der Körper (10) einen radial innenliegenden Kern aus einem ersten harten Material (20) aufweist und radial außerhalb von diesem Kern wenigstens teilweise aus einem zweiten weicheren Material (22) ausgebildet ist,
**dadurch gekennzeichnet, dass**
- der Körper (10) wenigstens eine Vertiefung (14) auf seiner Körperoberfläche aufweist, welche die pulvrige oder flüssige Substanz behältnisartig aufnehmen kann, und
- der Körper (10) einstückig aus dem ersten Material (20) und darauf aufgespritzt dem zweiten Material (22) gebildet ist,
- wobei die wenigstens eine Vertiefung (14) auf der Körperoberfläche durch Verwendung einer Spritzgussform, welche wenigstens eine Erhöhung zur Erzeugung dieser wenigstens einen Vertiefung (14) aufweist, ausgebildet ist.

2. Behältnis nach Anspruch 1,
**dadurch gekennzeichnet, dass**
die wenigstens eine Vertiefung (14) im Körper (10) als Nut ausgebildet ist.

3. Behältnis nach Anspruch 1 oder 2,
**gekennzeichnet durch**
wenigstens eine Vertiefung (14), welche sich kugelsegmentartig in die Körperoberfläche des Körpers (10) erstreckt.

4. Behältnis nach einem der vorangehenden Ansprüche,
**dadurch gekennzeichnet, dass**
zwischen 5% und 80% der Körperoberfläche des Körpers (10) als Vertiefung (14) ausgebildet ist.

5. Behältnis nach einem der vorangehenden Ansprüche,
**dadurch gekennzeichnet, dass**
der Körper (10) hohl oder massiv ausgebildet ist.

6. Behältnis nach einem der vorangehenden Ansprüche,
**dadurch gekennzeichnet, dass**
der Körper (10) aus unterschiedlichen Materialien (20, 22) hergestellt ist, wobei insbesondere eines dieser Materialien (20, 22) Kunststoff ist.

7. Behältnis nach einem der vorangehenden Ansprüche,
**dadurch gekennzeichnet, dass**
der Körper (10) in seinem radial außen liegenden Bereich, und insbesondere an der Körperoberfläche, wenigstens teilweise, aus thermoplastischem Elastomer (TPE) und/oder aus einer Mischung aus thermoplastischem Elastomer und Polypropylen (PP) ausgebildet ist.

8. Behältnis nach einem der vorangehenden Ansprüche,
**dadurch gekennzeichnet, dass**
die Körperoberfläche des Körpers (10) zumindest außerhalb der Vertiefungen (14) aus einem weichen Material (22), wie insbesondere thermoplastischem Elastomer und/oder einer Mischung aus thermoplastischem Elastomer und Polypropylen (PP) hergestellt ist.

## Claims

1. Repository with a body (10), in particular a ball or an ellipsoid arranged in this repository, to accept powdery or liquid substances like deodorants or the like,
- whereas the body (10) is rotatably supported in this repository and a part of the surface of this body extends inside of this repository and a part of the surface of this body extends outside of this repository and whereas this powdery or liquid substance can be transported on the surface of this body from the inside of this repository to the outside of this repository, and
- whereas the body (10) has a radial inwardly located core made from a first hard material (20) and is at least partially formed of a second softer material (22) radial outwardly of this core,
wherein
- the body (10) has at least one dimple (14) on its surface to accept the powdery or liquid substance like a container, and
- the body (10) is made as one piece from the first material (20) and an injection-mould coat of the second material (22),
- whereas the at least one dimple (14) on the surface of the body is formed by a mould, which has at least a bump to cause this at least one dimple (14).

2. Repository according to claim 1,
wherein
the at least one dimple (14) in the body (10) is formed as a groove.

3. Repository according to claim 1 or 2,
**characterised by**
at least one dimple (14) which extends as a spherical segment on the surface of the body (10).

4. Repository according to one of the above claims,
wherein
between 5 % and 80 % of the surface of the body (10) are formed by this dimple (14).

5. Repository according to one of the above claims,
wherein
the body (10) is hollow or solid.

6. Repository according to one of the above claims,
wherein
the body (10) is made from different materials (20, 22), whereas one of these materials (20, 22) is a plastic, in particular.

7. Repository according to one of the above claims,
wherein
the radially outward region of the body (10), and particularly its surface is formed of a thermoplastic elastomer (TPE) and/or a mixture of a thermoplastic elastomer and polypropylene (PP), at least partially.

8. Repository according to one of the above claims,
wherein
the surface of the body (10) at least except for the dimples (14) is made from a soft material (22), in particular such as a thermoplastic elastomer (TPE) and/or a mixture of a thermoplastic elastomer and polypropylene (PP).

## Revendications

1. Récipient comprenant un corps (10), en particulier une sphère ou un ellipsoïde, destiné à être agencé dans le récipient, celui-ci étant prévu pour recevoir des substances en poudre ou en liquide, comme des déodorants ou similaires,
- dans lequel le corps (30) est monté sur le récipient avec possibilité de rotation et une partie de la surface du corps s'étend à l'intérieur du récipient et une partie de la surface du corps s'étend à l'extérieur du récipient, la substance en poudre ou en liquide pouvant être transporté sur la surface du corps, et cela de l'intérieur du récipient vers l'extérieur du récipient, et
- le corps comprend un noyau radialement intérieur en un premier matériau dur (20) et, radialement à l'extérieur de ce noyau, il est réalisé au moins partiellement en un second matériau (22) plus tendre,
**caractérisé en ce que**
- le corps (10) comporte au moins un renfoncement (14) sur sa surface, qui est capable de recevoir la substance en poudre ou en liquide à la manière d'un récipient, et
- le corps (10) est réalisé d'un seul tenant à partir du premier matériau (20) et à partir du second matériau (22) enrobé sur celui-ci, et
- ledit au moins un évidement (14) est ménagé sur la surface du corps en utilisant un moule de coulée par injection, qui présente au moins une surélévation pour produire ledit au moins un renfoncement (14).

2. Récipient selon la revendication 1,
**caractérisé en ce que** ledit au moins un renfoncement (14) dans le corps (10) est réalisé sous forme de gorge.

3. Récipient selon la revendication 1 ou 2,
**caractérisé par** au moins un renfoncement (14) qui s'étend à la manière d'une calotte sphérique dans la surface du corps (10).

4. Récipient selon l'une des revendications précédentes,
**caractérisé en ce qu'**entre 5 % et 80 % de la surface du corps (10) est réalisée sous forme de renfoncement (14).

5. Récipient selon l'une des revendications précédentes,
**caractérisé en ce que** le corps (10) est réalisé creux ou massif.

6. Récipient selon l'une des revendications précédentes,
**caractérisé en ce que** le corps (10) est fabriqué à partir de matériaux différents (20, 22), l'un de ces matériaux (22, 20) étant en particulier une matière plastique.

7. Récipient selon l'une des revendications précédentes,
**caractérisé en ce que** le corps (10) est réalisé dans sa région située radialement à l'extérieur, et en particulier au niveau de la surface du corps, au moins partiellement en un élastomère thermoplastique (TPE) et/ou en un mélange d'élastomère thermoplastique et de polypropylène (PP).

8. Récipient selon l'une des revendications précédentes,
**caractérisé en ce que** la surface du corps (10) est réalisée, au moins à l'extérieur des renfoncements (14), en un matériau tendre (22), comme en particulier un élastomère thermoplastique et/ou un mélange d'élastomère thermoplastique et de polypropylène (PP).
